# EUROPEAN PATENT SPECIFICATION

(11) **EP 0 769 113 B1**
(45) Date of publication and mention of the grant of the patent: **26.05.1999**
(21) Application number: 95933535.7
(22) Date of filing: 12.10.1995
(51) Int. Cl.: F16K 27/06, F16K 5/06

(54) **VALVE**
VENTIL
VANNE

(30) Priority: 12.10.1994 GB 9420533
(43) Date of publication of application: 23.04.1997
(73) Proprietor: FORT VALE ENGINEERING LIMITED, Nelson, Lancashire BB9 0SG (GB); Forac Limited, Hove, East Sussex BN13 1AU (GB); Ram Universal Limited, Broughton Astley, Leicestershire LE9 6PD (GB)
(72) Inventor: FOSTER, Steven, David, Gordon, Halifax West Yorkshire HX1 3UG (GB); WORLD, Alan, Lubenham Leicestershire LE16 9SP (GB); JAMES, Alan, David, Leicestershire LE17 5QE (GB); BUNYARD, Alan, Donald, Brighton East Sussex BN1 8NR (GB)
(74) Representative: W.P. Thompson & Co.
(86) International application number: GB9502410
(87) International publication number: WO9612131

(56) References cited:
- DE-A- 2 249 056
- DE-C- 3 905 241
- US-A- 4 036 470
- US-A- 4 696 323

## Description

The present invention relates to valves, and in particular, but not exclusively, to valves for controlling and regulating the flow of fluids.

There are many different types of valves for controlling and regulating the flow of fluids, a recent example being that disclosed in US 4696323. Although the design of valves varies widely, they all work in accordance with the same basic principle. Typically, a valve closure member is pivotally mounted within a valve housing by means of opposed spindles projecting from the closure member and located in corresponding recesses within the valve housing. The valve housing is provided with a valve seat and the valve closure member is pivotable into and out of engagement with the valve seat to close and open the valve respectively.

In order to assemble and maintain the valve it must be possible to remove the valve closure member from the valve housing. This is particularly important where the valves are used in applications where hygiene is paramount. There must also be easy access for regular inspection and maintenance of any seals within the valve.

A common construction which is employed to provide these features, for example as shown in US 4696323, is to form the valve housing from two releasably securable halves which in use are joined together in a plane which intersects and is parallel to the pivotal axis of the valve closure member and is perpendicular to direction of flow of the valve. Each valve housing half is thus provided with opposed semicylindrical recesses which, when the valve halves are secured together, provide cylindrical recesses for receipt of the opposed spindles of the valve closure member.

By separating the two valve halves (usually by removal of several bolts) the valve closure member can easily be lifted away from both valve housing halves, and there is also easy access to the valve seals for inspection and/or replacement.

One of the problems with such an arrangement is to make the valve fluid-tight in operation. The pivotal axis of the valve closure member extends in the plane of the join between the two valve housing halves and although effective seals can be provided between the two valve housing halves there is an increased likelihood of leakage along the joint plane in the portions of the valve housing halves which receive the spindles of the valve closure member.

DE-A-2249056 discloses a valve body which is split into two along an oblique plane, i.e. inclined to the pivotal axis and the longitudinal axis of the valve, whereby one valve body portion accommodates one of the valve closure member spindles and the other valve body portion accommodates the other valve closure member spindles. However, such a valve has shortcomings in that each of the flanges for connecting the valve to adjacent pipework is connected to a respective one of the valve body portions. Thus, in order to dismantle the valve it is necessary to remove it completely from the pipework to which it is fitted. Another disadvantage is that seal wear is relatively high, since the valve closure member slides with respect to a valve seal.

The valve of DE-A-2249056 is also prone to wear since its valve closure member slides across the seal forming the valve seat during actuation. This necessitates frequent replacement of the valve seals.

It is an object of the present invention to provide a valve which may be easily and quickly assembled and just as easily dismantled to facilitate maintenance and/or repair of the valve and which is not prone to excessive seal wear.

In accordance with the present invention, there is provided a valve assembly comprising a valve housing having an inlet, an outlet, an annular valve seat between the inlet and the outlet, at least one attachment member for connecting the valve assembly to an adjacent component and a valve closure member pivotally mounted within the valve housing by means of two spindles received in recesses within the valve housing, the valve closure member being pivotable between a first, closed position in which it is engaged with the valve seat and a second, open position in which it is displaced from the valve seat, the valve housing comprising two releasably securable valve housing portions which are joined together along a plane which intersects, and is inclined to, the pivotal axis of the valve closure member such that one of the valve closure member spindles is received in a recess located wholly within a first valve housing portion and the other valve closure spindle is located in a recess located wholly within the second valve housing portion, characterised in that the at least one attachment member is releasably connected to one of the valve housing portions and in that the valve closure member is mounted eccentrically with regard to the spindles and/or the spindles of the valve closure member are mounted such that their pivotal axis is offset from the longitudinal axis of the housing.

Such an arrangement, pivotally mounting one valve closure member spindle in one valve housing portion and the other valve closure member spindle in the other valve housing portion, by splitting the valve housing along a plane inclined to the pivotal axis of the valve closure member, permits a continuous peripheral seal to exist between the two valve halves and reduces the likelihood of leakage from the valve. The eccentric mounting of the valve closure member also ensures that it does not slide across the valve seat when actuated but instead is pulled away from or pushed towards the valve seat as well as being pivoted, thus greatly reducing seal wear.

Preferably, the valve seat comprises a seal member. The seal member may advantageously comprise an abutment portion and a resiliently deformable portion, such as a O-ring, located between the abutment portion and the valve housing portion.

In a preferred embodiment, the valve closure member comprises a convex obturator which is releasably engageable with an annular valve seat located on one of the valve housing portions.

The eccentric mounting of the valve closure member may be achieved by mounting the valve closure member eccentrically with regard to the mounting spindles and/or may be achieved by mounting the spindles such that their pivotal axis is offset from the longitudinal axis of the valve housing.

Preferably, the spindles are integrally formed with the valve closure member. Advantageously, the spindles and the valve closure member may be machined from a single piece of material.

In an alternative arrangement the valve closure member may be provided with a recess for receipt of a seal which, in use, is adapted to engage against a solid portion of the valve housing.

In the case where the seal is located in a recess in the valve closure member the valve closure member may further comprise a plastics material covering the valve closure member and the seal located thereon.

As an alternative or in addition, each valve housing portion may comprise an internal coating or lining of a plastics material, the preferred embodiment being to fix the coating by means of T-section slots machined at predetermined points within the valve body.

In one embodiment, the valve closure member being pivotable beyond the position in which further displacement is normally prevented by engagement with the valve seal, the valve further comprising biassing means for biassing the valve closure member into a position beyond its normal closed position, whereby in the absence of the valve seal the valve closure member will engage the valve seat.

Such an arrangement provides a fireproof valve in the sense that if the valve seal is burned the biassing of the valve closure member to a position beyond its normal closed position will enable the valve closure member to contact the portion of the valve housing which normally supports the seal and thereby ensure that the valve is firmly shut. Alternatively the obturator spindle supports may have a built-in compliance to obviate any wedging effect of the seat and the obturator. To further prevent wedging, the valve may be equipped with integral end stops.

The valve seal may be located either on the valve housing or on the valve closure member.

By way of example only, a specific embodiment of the present invention will now be described, with reference to the accompanying drawings, in which:-
Fig. 1 is an end view of a first embodiment of valve assembly in accordance with the present invention;
Fig. 2 is a plan view of the valve assembly of Fig. 1, looking in the direction of arrows II-II;
Fig. 3 is a side elevational cross-section of the valve of Fig. 1;
Fig. 4 is an inverted plan view of the valve closure member of the valve of Fig. 1; and
Fig. 5 is a side elevational cross-section through a valve seat portion of a second embodiment of valve assembly in accordance with the present invention.

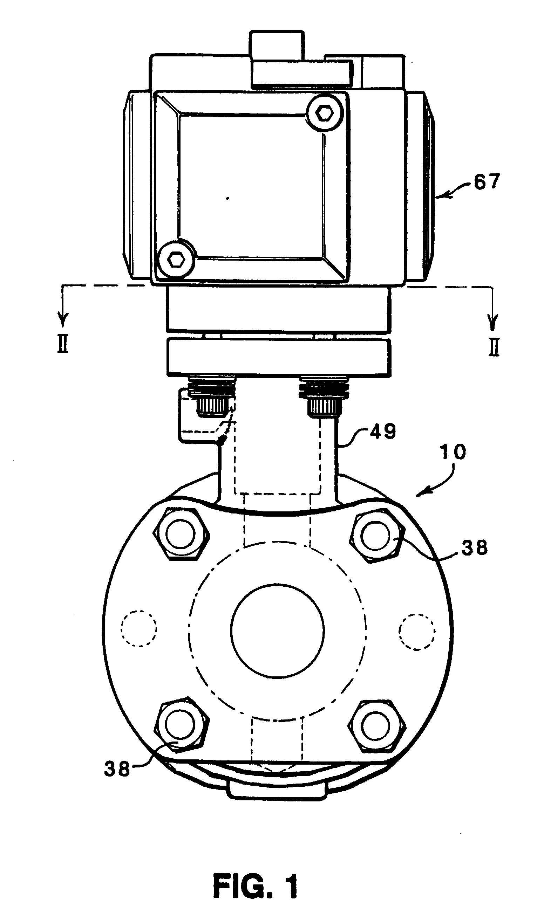

Referring firstly to Figs. 1 to 3, the valve assembly comprises a valve housing indicated generally at 10 and a valve closure member 12 which is pivotally mounted within the housing. The valve closure member 12 is in the form of a convex obturator and is provided with upper and lower spindles 14, 16 by means of which the valve closure member is pivotally mounted within the housing. The valve closure member 12 and the upper and lower spindles 14, 16 are machined from a single piece of metal.

The valve closure member 12 is engageable with and disengageable from an annular valve seat which accomodates an annular seal 17 which is seated in a complimentarily-shaped recess 18 in the valve housing 10. The seal comprises a PTFE annular abutment portion 20 which, in use, engages the valve closure member 12 and is provided with an annular recess 22 in its rear face which receives a resilient O-ring seal 24. The seal 17 is held in place by means of a stainless steel snap retaining ring 26 located in an annular recess 28.

As seen in Figs. 1 to 3, the valve housing is formed from two releasably securable valve housing portions 30, 32. The outer end face 33 of each of the valve housing portions 30,32 is planar and in use each face 33 abuts a corresponding planar face 34 of a respective outlet or inlet nozzle 35,36. The planar faces of the housing portions 30,32 and of the nozzles 35,36 are sealed by means of an annular O-ring seal 37 and the housing portions 30,32 are secured to their respective nozzles 35,36 by means of a plurality of bolts 38. The nozzles 35,36 connect to adjacent piping sections in a manner well known in the art and a through passage is formed by means of aligned bores B in the two valve housing portions 30,32 and in the nozzles 35,36, the longitudinal axis 39 of the through passage being coaxial with the centre of the valve seat.

However, in contrast to many existing valve assemblies, the valve housing 10 is divided into the two valve housing portions 30, 32 along a planar surface 40 which is inclined to the pivotal axis of the valve closure member and to the longitudinal axis 39 of the valve housing. In this way, the two valve housing portions can abut each other about a continuous annular surface formed between enlarged flange portions 41, 42 which are inclined to the pivotal axis of the valve closure member 12.

The abutment plane of the two valve housing portions is chosen so that the upper spindle 14 of the valve closure member 12 is wholly mounted within the first valve housing portion 30 while the lower valve closure member spindle 16 is wholly received within a recess 44 located within the other valve housing portion 32.

In this way, the two portions of the valve housing can be sealed with respect to the exterior by means of a continuous O-ring seal 46, in contrast to the prior art arrangements. Any misalignment of the two body halves may be overcome in several ways, a preferred way being to provide longitudinally captivated locators between the two body halves along the inclined plane joining the two body halves.

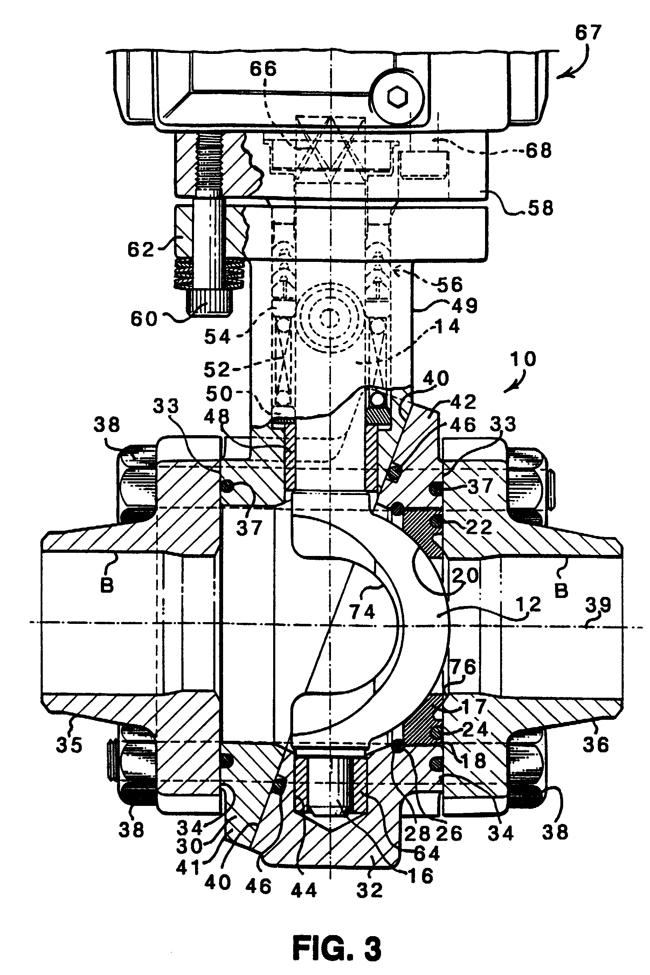

The upper valve closure member spindle 14 is received in a tubular extension 49 of the valve housing portion 30 which extends radially with respect to the longitudinal axis 39 of the housing. The spindle is received in an upper bearing bush 48 adjacent to the valve closure member 12 and as best seen in Fig. 3 is sealed with regard to the exterior by means of a gland packing comprising a stainless steel supporting ring 50 which engages the upper end of the bush 48, a compression spring 52 which engages the upper surface of the supporting ring 50 and the lower surface of a further stainless supporting ring 54, a PTFE chevron packing indicated generally at 56 and a gland follower 58 which holds the gland packing arrangement in position. The gland follower 58 is secured to the tubular extension by means of eight gland follower bolts 60 which are received in aligned threaded apertures provided in the periphery of the gland follower and in a peripheral flange 62 at the outer end of the tubular extension 49.

The lower spindle 16 is received in a lower bearing bush 64 which is entirely received in the recess 44 in the other valve housing portion 32.

It will also be noted that the upper end of the upper valve spindle 14 projects from the valve housing in the form of a boss 66. This boss 66 is splined and is adapted to be received in a splined aperture in a conventional electrically operated valve actuator 67 in order to pivot the valve closure member 12 into and out of engagement with the valve seat. As shown in Fig. 3, an actuator mounting bolt 68 projects upwardly from the upper surface of the gland follower and comprises the threaded shank of a bolt 70 which is threadedly received in an aperture in the under surface of the gland follower 58.

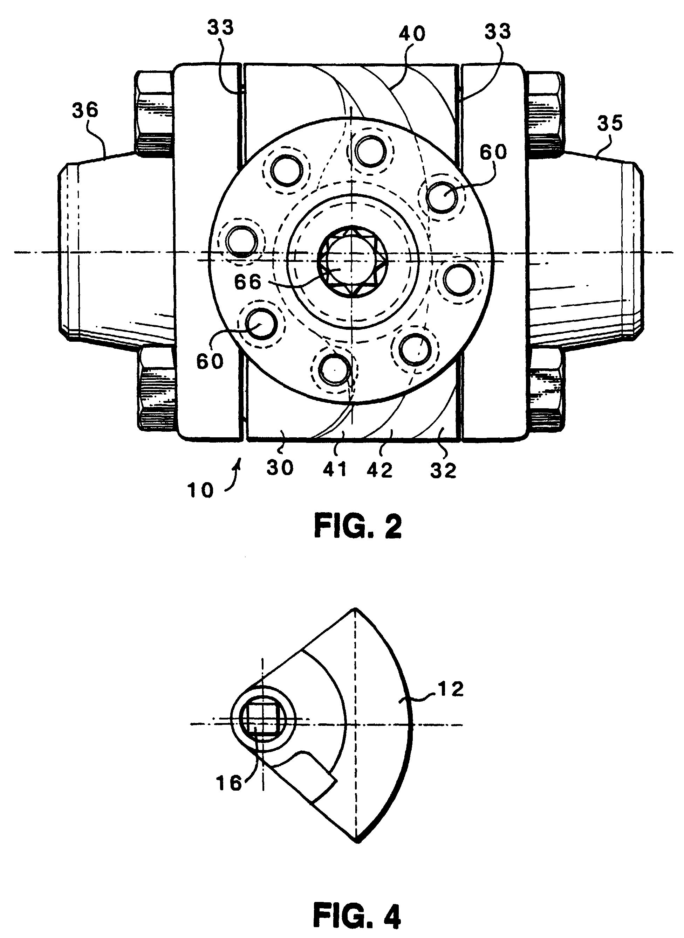

As best seen in Fig. 2, the pivotal axis of the aligned spindles 14, 16 is offset with regard to the longitudinal axis 39 of the valve housing by a distance which is proportional to the convex obturator radius and a minimum of 1/16" (1.5875mm). The valve closure member 12 is arranged with regard to the spindles 14, 16 such that when it is the closed position it is positioned symmetrically and centrally with regard to the longitudinal axis 39 of the valve housing. However, the eccentric mounting of the valve spindles 14, 16 ensure that as the valve closure member is moved away from its engagement with the valve seat, instead of wiping against the valve seat which might cause the valve seat to wear, the convex obturator is actually displaced away from the valve seat as it is pivoted, thereby tending to reduce any wear on the valve seat.

Alternatively or in addition, the pivotal axis of the spindles may intersect the longitudinal axis 39 and the valve closure member may be offset with respect to the pivotal axis.

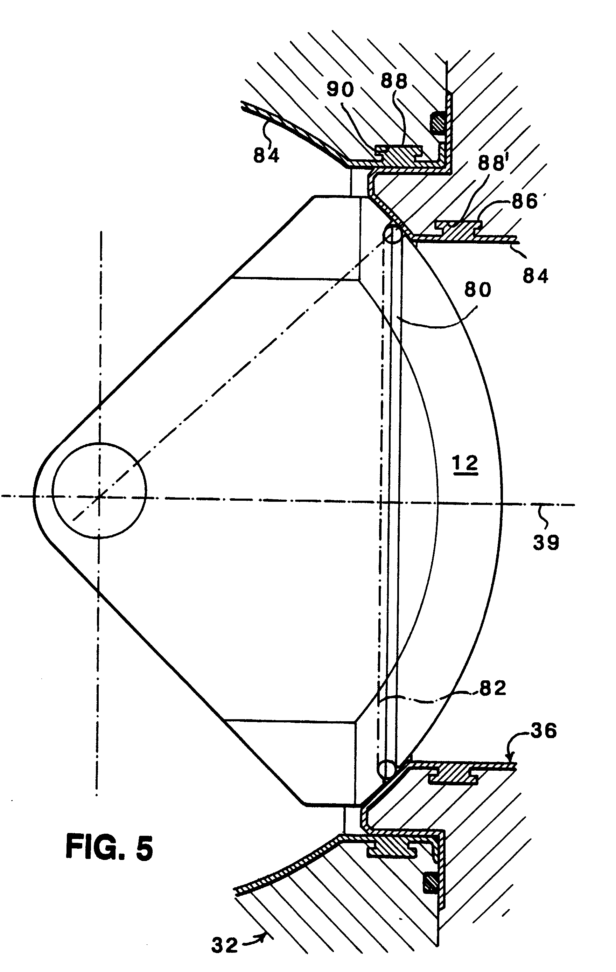

As seen in Fig. 4, the pivotal axis of the spindles is offset with respect to the valve closure member 12, in that the pivotal axis is radially or laterally displaced with respect to the centre of the sphere of which the valve closure member (or at least that portion which engages the valve seat) forms part. The offset of the pivotal axis with respect to the valve closure member is preferably of the order of 1/16" (1.5875mm). Ideally, this offset will be identical to the offset of the pivotal axis with respect to the longitudinal axis of the valve. This ensures that when the valve is in its open position, the valve closure member is flush with the adjacent surfaces of the valve body. Not only does this improve the flow characteristics of the valve, but it also enables "pigging" to take place through the valve.

In order to assemble the valve, the gland packing arrangement and the upper bearing bush 48 are inserted into the projecting tube portion 49 of the valve housing 30 and the lower bearing bush 64 is also inserted into the recess 44 in the other valve housing portion 32. The spindles 14, 16 are then inserted into the receiving portions of the respective valve housing portions and the two valve housing portions 30, 32 are brought together such that the flat faces of the inclined securing flanges 41, 42 abut each other with the apertures in the securing flanges aligned with one another. Securing bolts 38 are then inserted into aligned apertures in the flanges 41,42 whereupon the two valve housing portions are joined together to form the completed valve housing with the convex obturator being 180° from the closed position. The obturator must then be positioned to the correct failsafe mode.

The actuating mechanism 67 is then secured to the splined projection of the upper spindle 14, whereupon the valve closure member 12 can be pivoted from the closed position, wherein it is in contact with the seal 17, and an open position, wherein it is displaced from the seal 17. As mentioned previously, by offsetting the valve spindles 14, 16 with respect to the longitudinal axis 39 of the valve housing and by mounting the valve closure member 12 eccentrically with respect to the spindles, the valve closure member 12 is pulled away from the seal 17 as it is pivoted in the opening direction, thereby reducing the wear on the seal 17. The eccentric mounting also greatly reduces the torque required to actuate the valve.

The valve closure member is adapted to be pivotable through 90°, and when in its fully open position the profile of the inner face 74 of the valve closure member 12 corresponds with the profile of the through bore of the valve housing, thereby creating no restrictions for the flow of fluid. It is common for such valves to be displaceable through a range slightly greater than 90°, e.g. up to 95°. In other words, were it not for the presence of the seal 17 the valve closure member could pivot through an extra angle of approximately 5°. In the event of a fire and subsequent burn-out situation, by energising the seat or the actuating mechanism the obturator moves into contact with a fire-safe seat in the form of a tapered surface 76 in the upstream direction of the valve assembly, since the pivotal axis of the valve closure member is offset with regard to the longitudinal axis of the valve housing. In other words, as the valve closure member pivots to an angle greater than 90° it is displaced forwardly in the upstream direction of the valve, in contrast to the position where it is opened in which it is displaced in a direction downstream of the valve.

This also enables early detection of seal wear to be made by measuring the angular position of the valve closure member when in its fully closed position. As the seal begins to wear, the valve closure member will travel in excess of 90°, thus indicating that the seal is wearing, before the seal actually fails.

A second embodiment is illustrated in Fig. 5. In this embodiment the seal 17 of the first embodiment is replaced with a PTFE encapsulated O-ring seal 80 which is seated in an annular recess 82 in the valve closure member 12. Also, the inner surfaces of the valve housing portions 30,32 (and, not shown, of the nozzles 35,36 connected thereto) are lined with an internal coating 84 of a plastics material, the coating being fixed-in the housing by a plurality of annular T-section ribs 86,88 located in complimentarily-shaped annular recesses 88',90 in the valve housing. The lining may also be used in the first embodiment.

The invention is not restricted to the details of the foregoing embodiments. For example, the valve actuator may be replaced with a different actuator, such as a manually-operated handle.

## Claims

1. A valve assembly comprising a valve housing (10) having an inlet, an outlet, an annular valve seat (76) between the inlet and the outlet, at least one attachment member (35, 36) for connecting the valve assembly to an adjacent component and a valve closure member (12) pivotally mounted within the valve housing by means of two spindles (14, 16) received in recesses within the valve housing, the valve closure member being pivotable between a first, closed position in which it is engaged with the valve seat and a second, open position in which it is displaced from the valve seat, the valve housing comprising two releasably securable valve housing portions (30, 32) which are joined together along a plane which intersects, and is inclined to, the pivotal axis of the valve closure member such that one of the valve closure member spindles is received in a recess located wholly within a first valve housing portion and the other valve closure spindle is located in a recess located wholly within the second valve housing portion, characterised in that the at least one attachment member (35, 36) is releasably connected to one of the valve housing portions and in that the valve closure member (12) is mounted eccentrically with regard to the spindles (14, 16) and/or the spindles (14, 16) of the valve closure member are mounted such that their pivotal axis is offset from the longitudinal axis (39) of the housing.

2. A valve assembly as claimed in claim 1, wherein the valve closure member (12) comprises an annular sealing portion which is releasably engageable with the valve seat (76), the pivotal axis of the valve closure member being offset with respect to the annular sealing portion.

3. A valve assembly as claimed in claim 2, wherein the pivotal axis of the valve closure member (12) is offset radially with respect to the sealing portion.

4. A valve assembly as claimed in claim 2 or claim 3, wherein the sealing portion forms part of a sphere, the pivotal axis of the valve closure member (12) being offset with respect to the centre of the sphere of which the sealing portion forms part.

5. A valve assembly as claimed in claim 4, wherein the pivotal axis of the valve closure member (12) is offset longitudinally with respect to the centre of the sphere of which the sealing portion forms part.

6. A valve assembly as claimed in any of claims 1 to 5, wherein the pivotal axis of the valve closure member (12) is offset laterally with respect to the valve housing (10).

7. A valve assembly as claimed in claim 6 when appendent to any of claims 2 to 5, wherein the lateral offset of the pivotal axis with respect to the valve housing (10) is substantially equal to the offset of the pivotal axis of the valve closure member (12) with respect to the sealing portion.

8. A valve assembly as claimed in any of claims 1 to 7, comprising a deformable seal (17,80) located between the valve closure member and the valve seat when the valve is in its closed position, the valve closure member (12) being pivotable beyond the position in which further displaceable is normally prevented by engagement of the valve seal, the valve assembly further comprising biassing means for biassing the valve closure member towards a position beyond its normal closed position, whereby in the absence of the valve seal the valve closure member (12) will engage a further, substantially non-deformable valve seat (76) in the valve housing.

9. A valve assembly as claimed in claim 8, wherein the seal (17) is provided on the valve housing and is engageable by the valve closure member to close the valve.

10. A valve assembly as claimed in claim 8, wherein the seal (80) is provided on the valve closure member (12).

11. A valve assembly as claimed in any of claims 8 to 10, wherein the spindle supports comprise a built-in compliance to obviate any wedging effect of the seat and valve closure member.

12. A valve assembly as claimed in claim 11, further comprising integral end stops to further prevent wedging.

13. A valve assembly as claimed in any of claims 1 to 12, comprising two attachment members (35, 36) for connecting the valve assembly to adjacent components on either side of the valve assembly, each attachment member being releasably connected to a respective one of the valve housing portions (30, 32).

14. A valve assembly as claimed in any of claims 1 to 13, comprising securing means (38) for securing together the two valve housing portions and the or each attachment member as a unit.

15. A valve assembly as claimed in claim 14, wherein the securing means (38) comprises an elongate securing member which passes through each of the valve housing portions and the or each attachment member.

16. A valve assembly as claimed in claim 15, comprising a plurality of elongate securing members (38) which pass through each of the valve housing portions and the or each attachment member.

17. A valve assembly as claimed in claim 15 or claim 16, wherein the or each elongate securing member comprises a bolt.

18. A valve assembly as claimed in claim 17, comprising a nut secured to the or each bolt.

19. A valve assembly as claimed in any of the preceding claims, wherein the valve closure member comprises a convex obturator which is releasably engageable with an annular valve seat located on one of the valve housing portions.

20. A valve assembly as claimed in any of the preceding claims, wherein the valve seat is located in one portion (32) of the valve housing.

21. A valve assembly as claimed in any of the preceding claims, wherein the spindles (14, 16) are integrally formed with the valve closure member (12).

22. A valve assembly as claimed in claim 21, wherein the spindles (14, 16) and the valve closure member (12) are machined from a single piece of material.

23. A valve assembly as claimed in any of the preceding claims, wherein the valve closure member (12) further comprises a coating material covering the valve closure member and the seal located therein.

24. A valve assembly as claimed in claim 23, wherein the coating comprises a plastics material.

25. A valve assembly as claimed in any of the preceding claims, wherein each valve housing portion is lined with a plastics material (84).

26. A valve assembly as claimed in claim 25, wherein the lining is fixed by means of undercut slots (88, 90) machined at predetermined points within the valve body.

## Patentansprüche

1. Ventilbaugruppe, die ein Ventilgehäuse (10) mit einem Einlaß, einem Auslaß, einem ringförmigen Ventilsitz (76) zwischen dem Einlaß und dem Auslaß, mindestens ein Anbringungselement (35, 36) zum Verbinden der Ventilbaugruppe mit einer benachbarten Komponente, und ein Ventilverschlußelement (12) umfaßt, das schwenkbar innerhalb des Ventilgehäuses mittels zwei Spindeln (14, 16) angebracht ist, die in Vertiefungen innerhalb des Ventilgehäuses aufgenommen werden, wobei das Ventilverschlußelement zwischen einer ersten, geschlossenen Position, in der es mit dem Ventilsitz in Eingriff steht, und einer zweiten, offenen Position geschwenkt werden kann, in der es von dem Ventilsitz verschoben ist, wobei das Ventilgehäuse zwei lösbar befestigbare Ventilgehäuseteile (30, 32) aufweist, die miteinander entlang einer Ebene verbunden sind, die die Drehachse des Ventilverschlußelements schneidet und zu derselben geneigt ist, so daß eine der Ventilverschlußelementspindeln in einer Vertiefung aufgenommen wird, die vollständig innerhalb des ersten Ventilgehäuseteils anordnet ist, und die andere Ventilverschlußspindel in einer Vertiefung angeordnet wird, die vollständig im zweiten Ventilgehäuseteil angeordnet ist, dadurch gekennzeichnet, daß das mindestens eine Anbringungselement (35, 36) lösbar mit einem der Ventilgehäuseteile verbunden ist, und daß das Ventilverschlußelement (12) exzentrisch hinsichlich der Spindeln (14, 16) angebracht ist und/oder die Spindeln (14, 16) des Ventilverschlußelements so angebracht sind, daß ihre Drehachse von der Längsachse (39) des Gehäuses versetzt ist.

2. Ventilbaugruppe nach Anspruch 1, bei der das Ventilverschlußelement (12) einen ringförmigen Dichtungsteil aufweist, der lösbar mit dem Ventilsitz (76) in Eingriff treten kann, wobei die Drehachse des Ventilverschlußelements hinsichtlich des ringförmigen Dichtungsteils versetzt ist.

3. Ventilbaugruppe nach Anspruch 2, bei der die Drehachse des Ventilverschlußelements (12) radial hinsichtlich des Dichtungsteils versetzt ist.

4. Ventilbaugruppe nach Anspruch 2 oder Anspruch 3, bei der der Dichtungsteil einen Teil einer Kugel bildet, wobei die Drehachse des Ventilverschlußelements (12) hinsichtlich der Mitte der Kugel versetzt ist, von der der Dichtungsteil einen Teil bildet.

5. Ventilbaugruppe nach Anspruch 4, bei der die Drehachse des Ventilverschlußelements (12) in Längsrichtung hinsichlich der Mitte der Kugel versetzt ist, von der der Dichtungsteil einen Teil bildet.

6. Ventilbaugruppe nach einem der Ansprüche 1 bis 5, bei der die Drehachse des Ventilverschlußelements (12) seitlich hinsichtlich des Ventilgehäuses (10) versetzt ist.

7. Ventilbaugruppe nach Anspruch 6, wenn anhängend an einen der Ansprüche 2 bis 5, bei der die seitliche Versetzung der Drehachse hinsichtlich des Ventilgehäuses (10) im wesentlichen gleich der Versetzung der Drehachse des Ventilverschlußelements (12) hinsichtlich des Dichtungsteils ist.

8. Ventilbaugruppe nach einem der Ansprüche 1 bis 7, die eine verformbare Dichtung (17, 80) umfaßt, welche zwischen dem Ventilverschlußelement und dem Ventilsitz angeordnet ist, wenn das Ventil sich in seiner geschlossenen Position befindet, wobei das Ventilverschlußelement (12) über die Position hinaus schwenkbar ist, in der eine weitere Verschiebung normalerweise durch Eingriff der Ventildichtung verhindert wird, wobei die Ventilbaugruppe weiter Vorspannungsmittel zum Vorspannen des Ventilverschlußelements zu einer Position über seine normale geschlossene Position hinaus aufweist, wodurch in der Abwesenheit der Ventildichtung das Ventilverschlußelement (12) mit einem weiteren, im wesentlichen nicht-verformbaren Ventilsitz (76) im Ventilgehäuse in Eingriff treten wird.

9. Ventilbaugruppe nach Anspruch 8, bei der die Dichtung (17) an dem Ventilgehäuse vorgesehen ist und durch das Ventilverschlußelement ergreifbar ist, um das Ventil zu schließen.

10. Ventilbaugruppe nach Anspruch 8, bei der die Dichtung (80) an dem Ventilverschlußelement (12) vorgesehen ist.

11. Ventilbaugruppe nach einem der Ansprüche 8 bis 10, bei der die Spindelhalter eine eingebaute Federung aufweisen, um einer jegliche Verkeilungswirkung des Sitzes und des Ventilverschlußelements zuvorzukommen.

12. Ventilbaugruppe nach Anspruch 11, die weiter integrale Endanschläge aufweist, um Verkeilung weiter zu verhindern.

13. Ventilbaugruppe nach einem der Ansprüche 1 bis 12, die zwei Anbringungselemente (35, 36) zum Verbinden der Ventilbaugruppe mit benachbarten Komponenten auf beiden Seiten der Ventilbaugruppe aufweist, wobei jedes Anbringungselement lösbar mit einem entsprechenden der Ventilgehäuseteile (30, 32) verbunden ist.

14. Ventilbaugruppe nach einem der Ansprüche 1 bis 13, die Befestigungsmittel (38) zum Befestigen der beiden Ventilgehäuseteile und des oder jedes Anbringungselements als eine Einheit aneinander umfaßt.

15. Ventilbaugruppe nach Anspruch 14, bei der das Befestigungsmittel (38) ein längliches Befestigungselement umfaßt, das durch jeden der Ventilgehäuseteile und das oder jedes Anbringungselement hindurchgeht.

16. Ventilbaugruppe nach Anspruch 15, die eine Vielzahl länglicher Befestigungselemente (38) aufweist, welche durch jeden der Ventilgehäuseteile und das oder jedes Anbringungselement hindurchgehen.

17. Ventilbaugruppe nach Anspruch 15 oder Anspruch 16, bei der das oder jedes längliche Befestigungselement eine Schraube umfaßt.

18. Ventilbaugruppe nach Anspruch 17, die eine an der oder jeder Schraube befestigte Schraubenmutter umfaßt.

19. Ventilbaugruppe nach einem der vorangegangenen Ansprüche, bei der das Ventilverschlußelement eine konvexe Schließeinrichtung umfaßt, die lösbar mit einem an einem der Ventilgehäuseteile angeordneten ringförmigen Ventilsitz in Eingriff gebracht werden kann.

20. Ventilbaugruppe nach einem der vorangegangenen Ansprüche, bei der der Ventilsitz in einem Teil (32) des Ventilgehäuses angeordnet ist.

21. Ventilbaugruppe nach einem der vorangegangenen Ansprüche, bei der die Spindeln (14, 16) integral mit dem Ventilverschlußelement (12) gebildet sind.

22. Ventilbaugruppe nach Anspruch 21, bei der die Spindeln (14, 16) und das Ventilverschlußelement (12) aus einem einzigen Materialstück hergestellt werden.

23. Ventilbaugruppe nach einem der vorangegangenen Ansprüche, bei der das Ventilverschlußelement (12) weiter ein Beschichtungsmaterial umfaßt, das das Ventilverschlußelement und die darin angeordnete Dichtung bedeckt.

24. Ventilbaugruppe nach Anspruch 23, bei der die Beschichtung ein Kunststoffmaterial umfaßt.

25. Ventilbaugruppe nach einem der vorangegangenen Ansprüche, bei der jeder Ventilgehäuseteil mit einem Kunststoffmaterial (84) ausgekleidet ist.

26. Ventilbaugruppe nach Anspruch 25, bei der die Auskleidung mittels unterschnittener Schlitze (88, 90) befestigt ist, die an vorbestimmten Punkten innerhalb des Ventilkörpers hergestellt sind.

## Revendications

1. Un ensemble à vanne comportant un logement de vanne (10) ayant une admission, une sortie, un siège de vanne annulaire (76) entre l'admission et la sortie, au moins un élément de fixation (35, 36) pour raccorder l'ensemble à vanne à une pièce adjacente et un élément de fermeture de vanne (12) monté de manière pivotante à l'intérieur du logement de la vanne au moyen de deux broches (14, 16) reçues dans des évidements à l'intérieur du logement de la vanne, l'élément de fermeture de vanne pouvant pivoter entre une première position fermée dans laquelle il est en prise avec le siège de la vanne et une seconde position ouverte dans laquelle il est déplacé hors du siège de la vanne, le logement de la vanne comportant deux portions de logement de vanne fixables et détachables (30, 32) qui sont jointes ensemble le long d'un plan qui coupe, et est incliné vers, l'axe de pivotement de l'élément de fermeture de vanne de façon telle que l'une des broches de l'élément de fermeture de vanne est reçue dans un évidement placé entièrement à l'intérieur d'une première partie de logement de vanne et l'autre broche de fermeture de vanne est placée dans un évidement qui se trouve entièrement à l'intérieur de la seconde portion du logement de vanne, caractérisé en ce que l'élément de fixation (au moins un) (35, 36) est raccordé de manière amovible à l'une des portions de logement de vanne et en ce que l'élément de fermeture de vanne (12) est monté excentriquement par rapport aux broches (14, 16) et/ou les broches (14, 16) de l'élément de fermeture de vanne sont montées de façon telle que leur axe de pivotement est décalé par rapport à l'axe longitudinal (39) du logement.

2. Un ensemble à vanne tel que revendiqué à la revendication 1, dans lequel l'élément de fermeture de vanne (12) comporte une portion d'étanchéité annulaire qui peut se mettre en prise de manière amovible avec le siège de vanne (76), l'axe de pivotement de l'élément de fermeture de vanne étant excentré par rapport à la portion d'étanchéité annulaire.

3. Un ensemble à vanne tel que revendiqué à la revendication 2, dans lequel l'axe de pivotement de l'élément de fermeture de vanne (12) est excentré radialement par rapport à la portion d'étanchéité.

4. Un ensemble à vanne tel que revendiqué à la revendication 2 ou 3, dans lequel la portion d'étanchéité fait partie d'une sphère, l'axe de pivotement de l'élément de fermeture de vanne (12) étant excentré par rapport au centre de la sphère dont la portion d'étanchéité forme une partie.

5. Un ensemble à vanne tel que revendiqué à la revendication 4, dans lequel l'axe de pivotement de l'élément de fermeture de vanne (12) est excentré longitudinalement par rapport au centre de la sphère dont la portion d'étanchéité fait partie.

6. Un ensemble à vanne selon l'une quelconque des revendications 1 à 5, dans lequel l'axe de pivotement de l'élément de fermeture (12) est excentré latéralement par rapport au logement de la vanne (10).

7. Un ensemble à vanne selon la revendication 6, lorsqu'annexée à l'une quelconque des revendications 2 à 5, dans lequel l'excentrement latéral de l'axe de pivotement par rapport au logement de la vanne (10) est substantiellement égal à l'excentrement de l'axe de pivotement de l'élément de fermeture de vanne (12) par rapport à la portion d'étanchéité.

8. Un ensemble à vanne selon l'une quelconque des revendications 1 à 7, qui comporte un joint d'étanchéité déformable (17, 80) monté entre l'élément de fermeture de vanne et le siège de la vanne quand la vanne est à sa position fermée, l'élément de fermeture de vanne (12) pouvant pivoter au-delà de la position dans laquelle tout autre déplacement est normalement empêché par la mise en prise du joint d'étanchéité de la vanne, l'ensemble à vanne comportant de plus des moyens de rappel pour rappeler l'élément de fermeture de vanne vers une position qui est au-delà de sa position fermée normale, auquel cas, en l'absence du joint étanche de la vanne, l'élément de fermeture de vanne (12) va se mettre en prise avec un autre siège de vanne essentiellement non déformable (76) dans le logement de la vanne.

9. Un ensemble à vanne tel que revendiqué à la revendication 8, dans lequel le joint d'étanchéité (17) est prévu sur le logement de la vanne et peut être mis en prise par l'élément de fermeture de la vanne pour fermer la vanne.

10. Un ensemble à vanne tel que revendiqué à la revendication 8, dans lequel le joint d'étanchéité (80) est prévu sur l'élément de fermeture de vanne (12).

11. Un ensemble à vanne selon l'une quelconque des revendications 8 à 10, dans lequel les supports à broche comportent une élasticité ou compliance intégrée pour parer à tout effet de coincement du siège et de l'élément de fermeture de la vanne.

12. Un ensemble à vanne tel que revendiqué à la revendication 11, qui comprend de plus des butées d'extrémité intégrales pour éviter davantage le coincement.

13. Un ensemble à vanne selon l'une quelconque des revendications 1 à 12, comportant deux éléments de fixation (35, 36) pour raccorder l'ensemble à vanne à des pièces adjacentes de part et d'autre de l'ensemble à vanne, chaque élément de fixation étant raccordé de manière amovible à une portion respective (30, 32) du logement de la vanne.

14. Un ensemble à vanne selon l'une quelconque des revendications 1 à 13, comportant des moyens d'assujettissement (38) pour assujettir ensemble les deux portions du logement de vanne et l'élément de fixation ou chaque élément de fixation pour former une unité.

15. Un ensemble à vanne tel que revendiqué à la revendication 14, dans lequel les moyens d'assujettissement (38) comportent un élément d'assujettissement allongé qui traverse chacune des portions du logement de la vanne et l'élément de fixation ou chaque élément de fixation.

16. Un ensemble à vanne tel que revendiqué à la revendication 15, qui comporte une pluralité d'éléments d'assujettissement allongés (38) qui traversent chacune des portions du logement de la vanne et l'élément de fixation ou chaque élément de fixation.

17. Un ensemble à vanne selon la revendication 15 ou la revendication 16, dans lequel l'élément d'assujettissement allongé ou chacun de ceux-ci comporte un boulon.

18. Un ensemble à vanne tel que revendiqué à la revendication 17, comportant un écrou fixé au boulon ou à chaque boulon.

19. Un ensemble à vanne selon l'une quelconque des revendications précédentes, dans lequel l'élément de fermeture de vanne comporte un obturateur convexe qui se met en prise de manière amovible avec un siège de vanne annulaire monté sur l'une des portions du logement de vanne.

20. Un ensemble à vanne selon l'une quelconque des revendications précédentes, dans lequel le siège de vanne est monté dans une portion (32) du logement de la vanne.

21. Un ensemble à vanne selon l'une quelconque des revendications précédentes, dans lequel les broches (14, 16) sont formées intégralement avec l'élément de fermeture de vanne (12).

22. Un ensemble à vanne tel que revendiqué à la revendication 21, dans lequel les broches (14, 16) et l'élément de fermeture de vanne (12) sont usinés à partir d'un seul morceau de matériau.

23. Un ensemble à vanne selon l'une quelconque des revendications précédentes, dans lequel l'élément de fermeture de vanne (12) comporte de plus une matière d'enrobage qui recouvre l'élément de fermeture de vanne et l'étanchéité qui se trouve à l'intérieur.

24. Un ensemble à vanne tel que revendiqué à la revendication 23, dans lequel l'enrobage comporte une matière plastique.

25. Un ensemble à vanne selon l'une quelconque des revendications précédentes, dans lequel chaque portion du logement de la vanne est garnie intérieurement d'une matière plastique (84).

26. Un ensemble à vanne tel que revendiqué à la revendication 25, dans lequel le garnissage intérieur est fixé au moyen de fentes contre-dépouillées (88, 90) usinées en des points prédéterminés à l'intérieur du corps de la vanne.
